# EUROPEAN PATENT APPLICATION

(11) **EP 4 730 245 A1**
(43) Date of publication of application: **22.04.2026**
(21) Application number: 25210219.9
(22) Date of filing: 21.10.2025
(51) Int. Cl.: G06Q 20/20, G06Q 20/32, G06Q 20/40, G06Q 20/42

(54) **PAYMENT METHOD, DEVICE, SYSTEM, AND EQUIPMENT BASED ON NEAR FIELD COMMUNICATION**

(30) Priority: 21.10.2024 CN 202411477226
(71) Applicant: Alipay (Hangzhou) Digital Service Technology Co., Ltd., Hangzhou, Zhejiang 310000 (CN)
(72) Inventor: ZHOU, Leijie, Hangzhou, Zhejiang, 310000 (CN); ZHONG, Qicai, Hangzhou, Zhejiang, 310000 (CN); HE, Xiaoman, Hangzhou, Zhejiang, 310000 (CN); WANG, Haichao, Hangzhou, Zhejiang, 310000 (CN)
(74) Representative: Fish & Richardson P.C.

(57) **Abstract**

This application provides near field communication-based payment methods, apparatuses, and systems, and devices. The solution includes: A user terminal obtains a payment page link from a near field communication terminal in a near field communication manner, and initiates a payment authorization request to a payment server based on the payment page link. The payment server sends a payment voucher to the near field communication terminal in response to the payment authorization request. The near field communication terminal sends the payment voucher to a checkout terminal in a wired communication manner, to implement near field communication-based payment.

## Description

### TECHNICAL FIELD

This application relates to the field of mobile payment technologies, and in particular, to near field communication-based payment methods, apparatuses, and systems, and devices.

### BACKGROUND

As a short-range wireless communication protocol, a near field communication (NFC) technology is widely applied to a plurality of fields such as mobile payment, information exchange, smart home control, access control, identity authentication and identification, electronic ticketing, and anti-counterfeiting.

When the NFC technology is applied to a mobile payment scenario, a current mainstream NFC-based payment method is as follows: A checkout device serving as a collection end is used as a card reader to read passively emulated information on a mobile device serving as a payment end, so as to implement payment. In practice, due to a plurality of aspects such as an information security risk, this NFC-based payment method is not popularized and applied on a large scale. Therefore, in the payment scenario, the checkout device serving as the collection end needs to be used as an emulated card. Considering that not all existing offline deployed checkout devices support interaction with mobile devices through card emulation, the offline deployed checkout devices need to be modified for functional upgrading. However, modification costs are usually relatively high.

In view of this, a solution, with low modification costs, for implementing NFC payment by using an existing checkout system needs to be provided.

### SUMMARY

In view of this, embodiments of this application provide near field communication-based payment methods, apparatuses, and systems, and devices, to provide a solution, with low modification costs, for implementing NFC payment by using an existing checkout system.

According to a first aspect of the embodiments of this application, a near field communication-based payment method is provided, and is applied to a near field communication terminal. The near field communication terminal is communicatively connected to a checkout terminal in a wired manner, and is configured to provide a near field communication function to the checkout terminal. The method includes: sending a payment page link to a user terminal in a near field communication manner, where the payment page link is used to trigger the user terminal to send a payment authorization request to a payment server; receiving a payment voucher sent by the payment server, where the payment voucher is generated by the payment server in response to the payment authorization request; and sending the payment voucher to the checkout terminal, where the payment voucher is used to be sent by the checkout terminal together with payment order information to the payment server, to complete payment.

According to a second aspect of the embodiments of this application, a near field communication-based payment method is provided, and is applied to a user terminal. The method includes: obtaining a payment page link from a near field communication terminal in a near field communication manner, where the near field communication terminal is communicatively connected to a checkout terminal in a wired manner, and is configured to provide a near field communication function to the checkout terminal; and sending a payment authorization request to a payment server based on the payment page link, where the payment authorization request is used to authorize the payment server to send a payment voucher to the near field communication terminal, and the payment voucher is used to be sent by the near field communication terminal together with payment order information to the checkout terminal, to complete payment.

According to a third aspect of the embodiments of this application, a near field communication-based payment method is provided, and is applied to a checkout terminal. The checkout terminal is communicatively connected to a near field communication terminal in a wired manner, and the near field communication terminal is configured to provide a near field communication function to the checkout terminal. The method includes: obtaining a payment voucher from the near field communication terminal, where the payment voucher is generated by a payment server in response to a payment authorization request sent by a user terminal; generating a payment request that carries the payment voucher and payment order information; and sending the payment request to the payment server, where the payment request is used to request the payment server to perform an operation on a resource in an account corresponding to the payment voucher based on the payment order information, to complete payment.

According to a fourth aspect of the embodiments of this application, a near field communication-based payment method is provided, and is applied to a payment server. The method includes: obtaining a payment authorization request that is sent by a user terminal and that carries a terminal identifier of a near field communication terminal, where the near field communication terminal is communicatively connected to a checkout terminal in a wired manner, and is configured to provide a near field communication function to the checkout terminal; generating a payment voucher in response to the payment authorization request; sending the payment voucher to the near field communication terminal, so that the near field communication terminal sends the payment voucher to the checkout terminal; receiving a payment request sent by the checkout terminal, where the payment request carries the payment voucher and payment order information; and performing an operation on a resource in an account corresponding to the payment voucher based on the payment order information, to complete payment.

According to a fifth aspect of the embodiments of this application, a near field communication-based payment apparatus is provided, and is applied to a near field communication terminal. The near field communication terminal is communicatively connected to a checkout terminal in a wired manner, and is configured to provide a near field communication function to the checkout terminal. The apparatus includes: a payment page link sending module, configured to send a payment page link to a user terminal in a near field communication manner, where the payment page link is used to trigger the user terminal to send a payment authorization request to a payment server; a payment voucher receiving module, configured to receive a payment voucher sent by the payment server, where the payment voucher is generated by the payment server in response to the payment authorization request; and a first payment voucher sending module, configured to send the payment voucher to the checkout terminal, where the payment voucher is used to be sent by the checkout terminal together with payment order information to the payment server, to complete payment.

According to a sixth aspect of the embodiments of this application, a near field communication-based payment apparatus is provided, and is applied to a user terminal. The apparatus includes: a payment page link acquisition module, configured to obtain a payment page link from a near field communication terminal in a near field communication manner, where the near field communication terminal is communicatively connected to a checkout terminal in a wired manner, and is configured to provide a near field communication function to the checkout terminal; and a payment authorization request sending module, configured to send a payment authorization request to a payment server based on the payment page link, where the payment authorization request is used to authorize the payment server to send a payment voucher to the near field communication terminal, and the payment voucher is used to be sent by the near field communication terminal together with payment order information to the checkout terminal, to complete payment.

According to a seventh aspect of the embodiments of this application, a near field communication-based payment apparatus is provided, and is applied to a checkout terminal. The checkout terminal is communicatively connected to a near field communication terminal in a wired manner, and the near field communication terminal is configured to provide a near field communication function to the checkout terminal. The apparatus includes: a payment voucher acquisition module, configured to obtain a payment voucher from the near field communication terminal, where the payment voucher is generated by a payment server in response to a payment authorization request sent by a user terminal; a payment request generation module, configured to generate a payment request that carries the payment voucher and payment order information; and a payment request sending module, configured to send the payment request to the payment server, where the payment request is used to request the payment server to perform an operation on a resource in an account corresponding to the payment voucher based on the payment order information, to complete payment.

According to an eighth aspect of the embodiments of this application, a near field communication-based payment apparatus is provided, and is applied to a payment server. The apparatus includes: a payment authorization request receiving module, configured to obtain a payment authorization request that is sent by a user terminal and that carries a terminal identifier of a near field communication terminal, where the near field communication terminal is communicatively connected to a checkout terminal in a wired manner, and is configured to provide a near field communication function to the checkout terminal; a payment voucher generation module, configured to generate a payment voucher in response to the payment authorization request; a second payment voucher sending module, configured to send the payment voucher to the near field communication terminal, so that the near field communication terminal sends the payment voucher to the checkout terminal; a payment request receiving module, configured to receive a payment request sent by the checkout terminal, where the payment request carries the payment voucher and payment order information; and a payment module, configured to perform an operation on a resource in an account corresponding to the payment voucher based on the payment order information, to complete payment.

According to a ninth aspect of the embodiments of this application, a near field communication-based payment system is provided, including a near field communication terminal, a checkout terminal, and a payment server. The near field communication terminal is communicatively connected to the checkout terminal in a wired manner, and is configured to provide a near field communication function to the checkout terminal. The near field communication terminal is configured to send a payment page link to a user terminal in a near field communication manner, where the payment page link is used to trigger the user terminal to send a payment authorization request to the payment server. The payment server is configured to: receive the payment authorization request sent by the user terminal; generate a payment voucher in response to the payment authorization request; and send the payment voucher to the near field communication terminal. The near field communication terminal is further configured to: receive the payment voucher sent by the payment server; and send the payment voucher to the checkout terminal. The checkout terminal is configured to generate a payment request that carries the payment voucher and payment order information. The payment server is further configured to perform an operation on a resource in an account corresponding to the payment voucher based on the payment order information in response to the payment request from the checkout terminal, to complete payment.

According to a tenth aspect of the embodiments of this application, a computing device is provided, including at least one processor and a memory communicatively connected to the at least one processor. The memory stores instructions executable by the at least one processor, and the instructions are executed by the at least one processor, to enable the at least one processor to perform the steps in the near field communication-based payment method.

The embodiments of this specification can achieve at least the following beneficial effects: The near field communication terminal is connected to the checkout terminal in a wired manner, to provide a capability of supporting near field communication payment to the checkout system. The user terminal obtains a payment page link from the near field communication terminal in a near field communication manner, and initiates a payment authorization request to the payment server based on the payment page link. The payment server sends a payment voucher to the near field communication terminal in response to the payment authorization request. The near field communication terminal sends the payment voucher to the checkout terminal in a wired communication manner, to implement payment. Therefore, the capability of supporting near field communication payment is provided to the existing checkout system at relatively low costs, and a near field communication-based payment solution is provided to a user.

### BRIEF DESCRIPTION OF DRAWINGS

To describe the technical solutions in embodiments of this specification or in the conventional technology more clearly, the following briefly describes the accompanying drawings needed for describing the embodiments or the conventional technology. Clearly, the accompanying drawings in the following descriptions merely show some embodiments of this application, and a person of ordinary skill in the art can still derive other drawings from these accompanying drawings without creative efforts.
FIG. 1 is a schematic diagram illustrating an application scenario of a near field communication-based payment method, according to some embodiments of this specification;
FIG. 2 is a schematic flowchart illustrating a near field communication-based payment method applied to a near field communication terminal, according to some embodiments of this specification;
FIG. 3 is a schematic flowchart illustrating a near field communication-based payment method applied to a user terminal, according to some embodiments of this specification;
FIG. 4 is a schematic flowchart illustrating a near field communication-based payment method applied to a checkout terminal, according to some embodiments of this specification;
FIG. 5 is a schematic flowchart illustrating a near field communication-based payment method applied to a payment server, according to some embodiments of this specification;
FIG. 6 is a schematic flowchart illustrating a near field communication-based payment method in an actual application scenario, according to some embodiments of this specification;
FIG. 7 is a schematic diagram illustrating a structure of a near field communication-based payment apparatus applied to a near field communication terminal and corresponding to FIG. 2, according to some embodiments of this specification;
FIG. 8 is a schematic diagram illustrating a structure of a near field communication-based payment apparatus applied to a user terminal and corresponding to FIG. 3, according to some embodiments of this specification;
FIG. 9 is a schematic diagram illustrating a structure of a near field communication-based payment apparatus applied to a checkout terminal and corresponding to FIG. 4, according to some embodiments of this specification;
FIG. 10 is a schematic diagram illustrating a structure of a near field communication-based payment apparatus applied to a payment server and corresponding to FIG. 5, according to some embodiments of this specification; and
FIG. 11 is a block diagram illustrating a structure of a computing device, according to some embodiments of this specification.

### DESCRIPTION OF EMBODIMENTS

Many specific details are described in the following descriptions to facilitate full understanding of this application. However, this application can be implemented in many different manners from those described here. A person skilled in the art can make similar promotion without departing from the content of this application. Therefore, this application is not limited to the specific implementations disclosed below.

The terms used in the one or more embodiments of this application are merely used to describe specific embodiments, and are not intended to limit the one or more embodiments of this application. The terms "a" and "the" of singular forms used in the one or more embodiments and the appended claims of this application are also intended to include plural forms, unless otherwise specified in the context clearly. It should be further understood that the term "and/or" used in the one or more embodiments of this application indicates and includes any or all possible combinations of one or more associated listed items.

It should be understood that although terms "first", "second", etc. may be used in the one or more embodiments of this application to describe various types of information, the information is not limited to these terms. These terms are merely used to distinguish between information of the same type. For example, "first" can also be referred to as "second" without departing from the scope of the one or more embodiments of this application. Similarly, "second" can also be referred to as "first". Depending on the context, the word "if" used here can be interpreted as "when", "while", or "in response to determining".

It is worthwhile to note that the user information (including but not limited to user equipment information, user personal information, etc.) and the data (including but not limited to data used for analysis, stored data, displayed data, etc.) used in this application are information and data that are authorized by users or that are fully authorized by all parties, and the related data need to be collected, used, and processed in compliance with relevant laws, regulations, and standards of relevant regions, and corresponding operation entries are provided for users to choose to authorize or reject.

Near field communication (NFC) is a short-range high-frequency radio communication technology. When the NFC technology is applied to a mobile payment scenario, a current mainstream NFC-based payment method is as follows: A checkout device serving as a collection end is used as a card reader to read passively emulated information on a mobile device serving as a payment end, so as to implement payment. In this application scenario, information such as a payment account of a user is provided to the checkout device in an NFC manner, and there is an information security risk. In addition, not all mobile device models currently support passive card emulation such as financial payment. Furthermore, all electronic wallets used by a consumer user are provided by a mobile device manufacturer. To use an NFC payment function of the mobile device, the user needs to activate various wallets based on demands of the mobile device manufacturer, making it inconvenient for the user to perform account management. Therefore, large-scale popularization and application of an NFC payment method in which the mobile device works in a passive mode are limited. In view of this, in the embodiments of this specification, NFC-based payment methods, apparatuses, and systems in which a mobile device is used as a card reader, and devices are provided.

Further, considering that not all existing offline deployed checkout devices support interaction with mobile devices through card emulation, the offline deployed checkout devices need to be modified for functional upgrading. In the embodiments of this specification, an NFC-based payment solution is provided, and implementation of this solution involves a relatively small modification to an existing checkout system and low modification costs.

The following describes, with reference to the accompanying drawings, in detail the technical solutions provided in the embodiments of this specification.

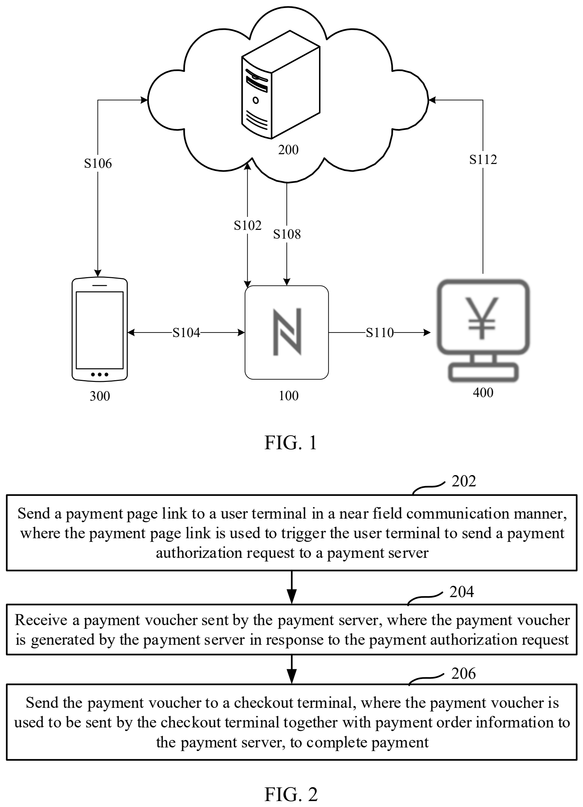

FIG. 1 is a schematic diagram illustrating an application scenario of a near field communication-based payment method, according to some embodiments of this specification.

As shown in FIG. 1, in this implementation scenario, a near field communication device 100, a payment server 200, a user terminal device 300, and a checkout device 400 can be included. In an actual payment scenario, a user who is to perform payment can enable a near field communication function of the user terminal device 300 and bring the user terminal device 300 close to the near field communication device 100, to implement near field communication-based payment.

Specifically, in the scenario shown in FIG. 1, the near field communication device 100 can be communicatively connected to the user terminal device 300 in a near field communication manner. The near field communication device 100 can be communicatively connected to the checkout device 400 in a wired manner. For example, the near field communication device 100 can be connected to the checkout device 400 through a universal serial bus. The near field communication device 100 can be communicatively connected to the payment server 200, the user terminal device 300 can be communicatively connected to the payment server 200, and the checkout device 400 can be communicatively connected to the payment server 200 through a wireless network. For example, the payment server 200 can be connected to terminal devices including one or more near field communication devices 100, one or more user terminal devices 300, and one or more checkout devices 400 through a local area network, a wide area network, the Internet, or another type of data network.

In practice, the near field communication device 100 in FIG. 1 can be a device that has an NFC chip, and can support near field communication. A specific representation form of the near field communication device 100 may not be specifically limited, for example, can be a form of a payment box. The payment server 200 in FIG. 1 can include but is not limited to any apparatus, device, platform, device cluster, cloud computing service center, etc. having computing and processing capabilities. The user terminal device 300 in FIG. 1 can include but is not limited to a smartphone, a tablet computer, a notebook computer, a palmtop computer, a smart wearable device, etc. The checkout device 400 in FIG. 1 can include but is not limited to a self-service checkout device, a manual checkout device, a stationary checkout device, a portable checkout device, etc.

Based on the solution in the embodiments of this specification, the near field communication device 100 can obtain a payment page link from the payment server 200 (S102). The user terminal device 300 can obtain the payment page link from the near field communication device 100 in a near field communication manner (S104). The user terminal device 300 can send a payment authorization request to the payment server 200 based on the payment page link (S106). The payment server 200 can send a payment voucher to the near field communication device 100 in response to the payment authorization request (S108). The near field communication device 100 can send the payment voucher to the checkout device 400 in a wired communication manner (S110). The checkout device 400 can send a payment request to the payment server 200 based on the payment voucher (S112). The payment server 200 can perform payment processing based on the payment voucher and payment order information that are carried in the payment request, to complete payment.

As shown in FIG. 1, the near field communication device 100 that supports the near field communication function is connected to the checkout device 400 in a wired manner, to provide a capability of supporting NFC payment to an existing checkout system. In addition, in this solution, an existing wired connection interface (for example, a universal serial bus interface) of the checkout device 400 can be directly used, and there is no need to modify the existing checkout system. Through steps such as S102 to S110 shown in FIG. 1, the payment voucher of the user is conveniently provided to the checkout device 400 in an NFC communication manner. For a payment procedure performed after the payment voucher is provided to the checkout device 400, a payment procedure of the existing checkout system can be reused. Modification costs are low, which is very conducive to promoting large-scale promotion and application of the NFC payment technology.

In this application, the near field communication-based payment methods are provided. This application further relates to near field communication-based payment apparatuses, near field communication-based payment systems, and computing devices, which are described in detail one by one in the following embodiments.

FIG. 2 is a schematic flowchart illustrating a near field communication-based payment method applied to a near field communication terminal, according to some embodiments of this specification. From a program perspective, the procedure can be performed by a program loaded on the near field communication terminal.

In embodiments of this specification, the near field communication terminal is communicatively connected to a checkout terminal in a wired manner, and is configured to provide a near field communication function to the checkout terminal.

As shown in FIG. 2, the procedure can include the following steps.

Step 202: Send a payment page link to a user terminal in a near field communication manner, where the payment page link is used to trigger the user terminal to send a payment authorization request to a payment server.

In embodiments of this specification, the near field communication terminal can establish a near field communication connection to the user terminal device. Specifically, the user terminal with a near field communication function enabled can be brought close to the near field communication terminal, and the near field communication terminal can establish a near field communication connection to the user terminal when sensing that a radio frequency field of the user terminal is close. During near field communication, the user terminal serves as a card reader, and the near field communication terminal serves as an emulated card. The user terminal can read predetermined label information from the near field communication terminal. In embodiments of this specification, the label information can specifically include the payment page link.

In practice, the payment page link can also be referred to as a terminal wakeup link, and can be specifically used to wake up a payment application on the user terminal, so that the user terminal sends the payment authorization request to the payment server by using the payment application. A payment account number can be logged in to in the payment application. Therefore, the payment authorization request sent by the user terminal device to the payment server can carry the payment account number logged in to in the payment application.

In addition, in practice, the user terminal can further learn of, by using the near field communication connection, a terminal identifier of the near field communication terminal that performs communication on a peer end, and can add the terminal identifier of the near field communication terminal to the payment authorization request, and send the payment authorization request to the payment server. Therefore, after generating a payment voucher, the payment server can send, based on the terminal identifier, the payment voucher to the near field communication terminal identified by the terminal identifier.

Step 204: Receive a payment voucher sent by the payment server, where the payment voucher is generated by the payment server in response to the payment authorization request.

The payment voucher generated by the payment server and sent to the near field communication terminal can be associated with the payment account number carried in the payment authorization request, that is, associated with a payment account number of a payment application comprehensive function logged in to on the user terminal. Specifically, the payment voucher can be a voucher used to perform an operation (for example, freeze or transfer out) on a resource in an account corresponding to the payment account number.

Step 206: Send the payment voucher to the checkout terminal, where the payment voucher is used to be sent by the checkout terminal together with payment order information to the payment server, to complete payment.

Specifically, after the payment voucher is sent to the checkout terminal, the payment voucher is used to be added to a payment request by the checkout terminal and sent to the payment server, and the payment request is used to request to perform an operation on a resource in an account corresponding to the payment voucher, to complete payment. More specifically, the payment server can perform, based on the payment voucher, an operation on a resource in an account represented by a payment account number associated with the payment voucher, to complete payment. For example, if the payment order information indicates that a target quantity of resources should be paid to a certain collection account, the target quantity of resources can be transferred out of the account represented by the payment account number.

In embodiments of this specification, the payment voucher can be specifically in a form of a string, and a function of the payment voucher is similar to a payment code in a related technology. In a two-dimensional code payment scenario, a two-dimensional code that has a payment function can be displayed on the user terminal. A payee scans the two-dimensional code by using a code scanning device and parses the two-dimensional code to obtain a string, to implement payment based on the string obtained through parsing. However, in embodiments of this specification, after the user terminal device "taps" the near field communication terminal, a request is made to the payment server to send the payment voucher to the near field communication terminal, so that the near field communication terminal provides the payment voucher to the checkout terminal, to implement payment.

In practice, a payment link of an existing checkout system can be reused, that is, the payment request can be sent by the checkout terminal to the payment server. It should be understood that in the payment request, the payment voucher can be carried, so that the payment server learns of a payment account on which an operation is to be performed. In addition, the payment order information can be carried, so that the payment server learns of a collection account on which an operation is to be performed, a quantity of resources of the operation, etc. Specifically, the payment order information can include an order amount and a payee account number. In addition, optionally, the payment order information can further include one or more of information such as a payee name and transaction content.

It should be understood that in the method in one or more embodiments of this specification, a sequence of some steps can be adjusted based on actual needs, or some steps can be omitted.

In the method in FIG. 2, the near field communication terminal is connected to the checkout terminal in a wired manner, to provide a capability of supporting near field communication payment to a checkout system. The near field communication terminal sends a payment page link to the user terminal in a near field communication manner. The user terminal initiates a payment authorization request to the payment server based on the payment page link. The payment server sends a payment voucher to the near field communication terminal in response to the payment authorization request. The near field communication terminal sends the payment voucher to the checkout terminal in a wired communication manner, to implement payment. Therefore, the capability of supporting near field communication payment is provided to the existing checkout system at relatively low costs, and a near field communication-based payment solution is provided to a user.

Based on the method in FIG. 2, embodiments of this specification further provide some improved implementations of the method, which are described below.

In one or more embodiments of this specification, the payment page link is time-sensitive for payment security considerations. Therefore, the near field communication terminal needs to continuously pull a latest payment page link from the payment server, to ensure that the user terminal can smoothly wake up the payment application by using the near field communication function, open a payment page, and send the payment authorization request.

Specifically, before the sending a payment page link to a user terminal in a near field communication manner, the method can further include: sending a payment page link acquisition request to the payment server; and receiving a payment page link returned by the payment server in response to the payment page link acquisition request.

In practice, the payment page link acquisition request can carry the terminal identifier, so that the near field communication terminal determines a source of the payment page link acquisition request, and the payment server feeds back the payment page link to the near field communication terminal corresponding to the terminal identifier after generating the payment page link. Optionally, the terminal identifier can include a device identifier of the near field communication terminal, and can further include a payee identifier associated with the near field communication terminal.

The payment page link can carry a payment token. The transaction token can be a string generated by the payment server. The transaction token can be associatively stored in the payment server with the terminal identifier of the near field communication terminal. In practice, the transaction token can be generated based on at least a part of information such as a timestamp and the terminal identifier.

In optional embodiments, the behavior of pulling the payment page link by the near field communication terminal can be periodically triggered, or can be triggered after last payment is completed. Specifically, the sending a payment page link acquisition request to the payment server can include: sending the payment page link acquisition request to the payment server based on a predetermined payment page link acquisition period or after payment for a previous order is completed.

In optional embodiments, the behavior of pulling the payment page link by the near field communication terminal can be triggered by the checkout terminal. Specifically, the sending a payment page link acquisition request to the payment server can include: receiving collection indication information sent by the checkout terminal; and then sending the payment page link acquisition request to the payment server in response to the collection indication information.

The operation of pulling the payment page link is performed to avoid a case in which no available payment page link can be read when the user terminal performs NFC interaction with the near field communication terminal and consequently a corresponding payment page cannot be opened.

In addition, optionally, when the checkout terminal sends the collection indication information to the near field communication terminal, the collection indication information can carry order information. Therefore, the near field communication terminal can add the order information to the payment page link acquisition request, and send the payment page link acquisition request to the payment server. The order information can include one or more of information such as an order amount, a payee account number, a payee name, and transaction content.

When the collection indication information carries the order information, optionally, the payment page link can carry at least a part of the order information. For example, the order amount can be carried in the payment page link. Further, if the payment page link carries the order amount, when the user terminal wakes up the payment application based on the payment page link, the order amount can be displayed on a payment page of the payment application, to notify a terminal user of the order amount, thereby improving a sense of interaction in a payment process of the user, and improving payment experience.

When the collection indication information carries the order information, in addition, optionally, the payment server can generate a transaction token based on at least a part of the order information and at least a part of information in the timestamp and the terminal identifier. In addition, the generated transaction token can be associatively stored with the order information.

In one or more embodiments of this specification, to improve interaction experience in a payment process performed by the user based on NFC, intermediate status information in the payment process can be displayed to the user by reusing a display screen of an existing checkout terminal.

In practice, considering that some users may be unfamiliar with an operation procedure of performing payment based on NFC, to improve payment efficiency, prompt information of the NFC payment procedure can be appropriately displayed to the user, to help the user efficiently complete the payment procedure.

In optional embodiments, before the sending a payment page link to a user terminal in a near field communication manner, the method can further include: determining whether a user terminal is detected within predetermined duration after collection indication information sent by the checkout terminal is received; and sending first status information to the checkout terminal if no user terminal is detected within the predetermined duration, where the first status information is used to indicate the checkout terminal to display first prompt information, and the first prompt information is used to prompt a user to interact with the near field communication terminal in the near field communication manner by using a user terminal.

The first status information can be used to indicate that no user terminal is detected. In addition, optionally, the first prompt information can include information used to prompt the user to enable a near field communication function of the user terminal. The first prompt information can further include information used to prompt the user to bring the user terminal close to the near field communication terminal.

In optional embodiments, the near field communication-based payment method can further include: obtaining device information of the user terminal, where the device information includes at least one of device hardware information or device operating system information; and sending second status information that carries the device information to the checkout terminal, where the second status information is used to indicate the checkout terminal to display second prompt information, and the second prompt information is used to prompt a user with a near field communication payment procedure corresponding to the device information. In practice, the device information of the user terminal can be obtained in the near field communication manner.

For the near field communication payment procedure related to the prompt information, optionally, the near field communication payment procedure can include prompting the user to enable a near field communication function of the user terminal, bringing the user terminal close to the near field communication terminal, etc. Optionally, the near field communication payment procedure can further include prompt information for tapping, on the payment page of the payment application, a control used to represent confirmation of payment. Optionally, the near field communication payment procedure can further include prompt information for entering a payment password on the payment page of the payment application. Optionally, the near field communication payment procedure can further include displaying one or more payment pages in the user terminal. In practice, the second prompt information of the near field communication payment procedure may not be limited to the above-mentioned example.

In practice, considering different models of user terminals and different types or versions of operating systems, content displayed on the user terminal and use and operation manners of the user terminal may be different. Display of the second prompt information corresponding to the device information of the user terminal can help the user understand the payment procedure, provide a prompt or a guide for the user to conveniently pay, and improve payment experience of the user.

Considering that an existing checkout terminal (in particular, a self-service checkout terminal) is usually equipped with a display screen used to display information to a user, there may be no need to configure a display screen for the near field communication terminal in embodiments of this specification, but related information about the user terminal can be sent to the checkout terminal by using the wired connection to the checkout terminal, and the checkout terminal provides an information prompt to the user based on the received related information about the user terminal. Therefore, payment experience of the user during NFC-based payment can be improved at low costs.

In one or more embodiments of this specification, to enable the payment user to conveniently obtain a payment result, the payment server can send payment result information to the near field communication terminal, and the near field communication terminal notifies the user of the payment result in a form of voice, light, etc. In this way, the user does not need to pay special attention to the payment result information displayed on the user terminal (for example, after "tapping" the near field communication terminal, the user can put away the user terminal without waiting to view the payment result), to provide convenience for the user to obtain the payment result. In particular, when the checkout terminal is specifically a manual checkout terminal that does not have a display screen, the user possibly cannot conveniently learn of the payment result from the checkout terminal. However, the near field communication terminal provided in embodiments of this specification can conveniently notify the user of the payment result.

Specifically, after the near field communication terminal sends the payment voucher to the checkout terminal, the method can further include: receiving first payment result information sent by the payment server, where the first payment result information specifically includes first payment result first sub-information or first payment result second sub-information, the first payment result first sub-information indicates a payment success, and the first payment result second sub-information indicates a payment failure; and sending transaction result prompt information corresponding to the first payment result information, where a display manner of the transaction result prompt information includes at least one of a voice form or an indicator form.

Optionally, a voice play module can be installed on the near field communication terminal. After the payment result information is received, the voice play module can be invoked to play the transaction result prompt information corresponding to the payment result information. Specifically, voice prompt information corresponding to the payment result information is played. For example, if the payment result information is specifically the first payment result first sub-information indicating a payment success, voice such as "payment successful" or "payment completed" can be played. For another example, if the payment result information is specifically the first payment result second sub-information indicating a payment failure, voice such as "payment fails" or "please pay again" can be played. Content of the voice prompt information provided here is merely an example, and does not constitute a limitation on the technical solutions of this application.

Optionally, an indicator module can be installed on the near field communication terminal. After the payment result information is received, the indicator module can be invoked to display the transaction result prompt information corresponding to the payment result information. Specifically, indicator information corresponding to the payment result information is displayed. For example, if the payment result information is specifically the first payment result first sub-information indicating a payment success, green indicator information can be displayed. For another example, if the payment result information is specifically the first payment result second sub-information indicating a payment failure, red indicator information can be displayed. Content of the indicator information provided here is merely an example, and does not constitute a limitation on the technical solutions of this application.

Optionally, both a voice play module and an indicator module can be installed on the near field communication terminal. In this case, after the payment result information is received, the voice play module can be invoked to play the transaction result prompt information corresponding to the payment result information. Specifically, voice prompt information corresponding to the payment result information is played. In addition, the indicator module is invoked to display the transaction result prompt information corresponding to the payment result information. Specifically, indicator information corresponding to the payment result information is displayed.

In one or more embodiments of this specification, the near field communication terminal is connected to the checkout terminal through a universal serial bus.

Specifically, universal serial bus (USB) communication includes two different specific transmission manners of human interface device (HID) transmission and bulk transmission.

An interrupt transfer mode is usually used for HID transmission. In this mode, a device is allowed to send data to a host when needed, without the need for continuous polling by the host. The HID device complies with a standard HID specification, and usually can normally work on the host without a driver. In HID transmission, a specific interrupt endpoint is usually used for data transmission. The endpoint has a fixed polling interval and a low data throughput. Usually, HID transmission is mainly used in a human interface device, for example, a keyboard, a mouse, a game handle, etc.

In embodiments of this specification, HID transmission can be used between the near field communication terminal and the checkout terminal. In this case, communication can be implemented by connecting the near field communication terminal and the checkout terminal through the USB, and there is no need to install a driver on the checkout terminal, that is, no modification to the checkout terminal is needed. In the solution in embodiments of this specification, when HID transmission is used, the near field communication terminal can unidirectionally send information to the checkout terminal.

In practice, the near field communication terminal can be in an HID mode by default. After a connection to the checkout terminal is implemented through the USB, a working state of the HID mode is entered. In the working state of the HID mode, the near field communication terminal can pull the payment page link from the payment server based on a predetermined period or after payment for a previous order is completed.

Bulk transmission is mainly used for bulk data transmission, and provides relatively high data transmission bandwidth. However, in a transmission process, cooperation between a host and a device is usually needed. Specifically, in bulk transmission, scheduling and coordination of data transmission need to be performed between the host and the device by using a driver. In bulk transmission, a bulk endpoint is usually used for data transmission. The endpoint has a relatively high data transmission rate and a relatively large data buffer. In addition, bulk transmission provides a relatively high data transmission rate, but there may be a specific delay. Usually, bulk transmission is applicable to a device that needs to transmit a large amount of data and is not sensitive to a delay, for example, a printer, a scanner, an external hard disk, etc.

In embodiments of this specification, bulk transmission can be used between the near field communication terminal and the checkout terminal. In this case, a driver needs to be installed on the checkout terminal, and then the near field communication terminal and the checkout terminal are connected through the USB to implement communication. That is, software modification to the checkout terminal is needed. In the solution in embodiments of this specification, when bulk transmission is used, bidirectional communication can be implemented between the near field communication terminal and the checkout terminal.

In practice, the near field communication terminal can be in an HID mode by default. After a connection to the checkout terminal is implemented through the USB, if a driver is installed on the checkout terminal, mode switching information can be sent to the near field communication terminal, so that the near field communication terminal switches from the HID mode to a bulk mode, and enters a working state. In the working state of the bulk mode, the near field communication terminal can pull the payment page link from the payment server in response to the collection indication information from the checkout terminal.

In at least some embodiments of this specification, the checkout terminal can be communicatively connected to the near field communication terminal through a universal serial bus. In a related technology, when a function of the checkout terminal is improved, a newly added device is communicatively connected to an existing checkout device through a serial port (that is, a COM port). However, based on a characteristic of the serial port, the existing checkout device needs to be modified for serial port communication, and hardware modification and software modification are involved. Consequently, an existing checkout system that is difficult to be modified cannot be applied. However, in the solution in embodiments of this specification, an existing universal serial bus interface of the checkout terminal can be used, and no hardware modification to the existing checkout terminal is needed. In addition, in practice, whether to perform adaptive software modification to the checkout terminal can be selected based on a case. For example, whether to implement USB HID communication or USB bulk communication can be determined based on factors such as whether it is convenient to modify the checkout terminal and modification costs.

In practice, the near field communication terminal provided in embodiments of this specification can be compatible with two modes of USB HID communication and USB bulk communication. Optionally, when the near field communication terminal is connected, through the USB, to the checkout terminal that supports USB HID communication, communication can be performed in the USB HID mode. Optionally, when the near field communication terminal is connected, through the USB, to the checkout terminal that supports USB bulk communication, communication can be performed in the USB bulk mode. It can be seen that the near field communication terminal provided in embodiments of this specification can provide an NFC payment function to most checkout terminal devices (regardless of whether the checkout terminal device supports USB HID communication or USB bulk communication). Costs are low and there is universality, which facilitates large-scale offline promotion and application of NFC payment.

Various technical features in the above-mentioned embodiments can be randomly combined, provided that there is no conflict or contradiction between combinations of the features. The combinations are not described one by one due to a space limitation. Therefore, any combination of the various technical features in the above-mentioned embodiments also falls within the scope disclosed in this specification.

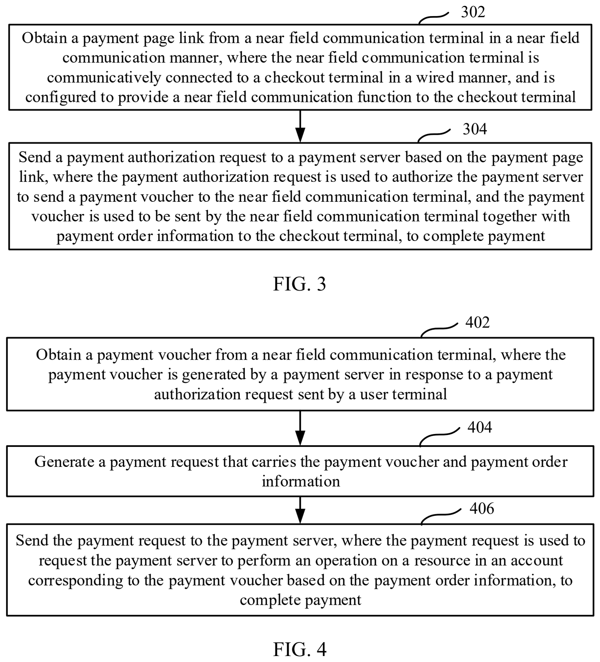

Corresponding to the method in FIG. 2, FIG. 3 is a schematic flowchart illustrating a near field communication-based payment method applied to a user terminal, according to some embodiments of this specification. From a program perspective, the procedure can be performed by a program loaded on the user terminal.

As shown in FIG. 3, the procedure can include the following steps.

Step 302: Obtain a payment page link from a near field communication terminal in a near field communication manner, where the near field communication terminal is communicatively connected to a checkout terminal in a wired manner, and is configured to provide a near field communication function to the checkout terminal.

Step 304: Send a payment authorization request to a payment server based on the payment page link, where the payment authorization request is used to authorize the payment server to send a payment voucher to the near field communication terminal, and the payment voucher is used to be sent by the near field communication terminal together with payment order information to the checkout terminal, to complete payment.

Specifically, the payment voucher can be used to be sent by the near field communication terminal to the checkout terminal through a universal serial bus.

The payment page link can be obtained by the near field communication terminal from the payment server.

The payment authorization request can carry a payment account number. The payment voucher generated by the payment server and sent to the near field communication terminal can be associated with the payment account number. Specifically, the payment voucher can be a voucher used to perform an operation (for example, freeze or transfer out) on a resource in an account corresponding to the payment account number. The payment server can perform an operation corresponding to the payment order information on the resource in the account corresponding to the payment account number based on the payment voucher, to complete payment. For example, if the payment order information indicates that a target quantity of resources should be paid to a collection account, the target quantity of resources are transferred out of the account corresponding to the payment account number.

The payment method applied to the user terminal in FIG. 3 corresponds to the payment method applied to the near field communication terminal in FIG. 2. Therefore, for a related part, references can be made to the above-mentioned descriptions. Details are omitted here for simplicity.

It should be understood that in the method in one or more embodiments of this specification, a sequence of some steps can be adjusted based on actual needs, or some steps can be omitted.

In the method in FIG. 3, the near field communication terminal is connected to the checkout terminal in a wired manner, to provide a capability of supporting near field communication payment to a checkout system. The near field communication terminal sends a payment page link to the user terminal in a near field communication manner. The user terminal initiates a payment authorization request to the payment server based on the payment page link. The payment server sends a payment voucher to the near field communication terminal in response to the payment authorization request. The near field communication terminal sends the payment voucher to the checkout terminal in a wired communication manner, to implement payment. Therefore, the capability of supporting near field communication payment is provided to the existing checkout system at relatively low costs, and a near field communication-based payment solution is provided to a user.

Based on the method in FIG. 3, embodiments of this specification further provide some improved implementations of the method, which are described below.

In one or more embodiments of this specification, the sending a payment authorization request to a payment server based on the payment page link can specifically include: waking up a payment application corresponding to the payment page link; and sending the payment authorization request to the payment server corresponding to the payment application.

In practice, a payment page can be displayed after the payment application on the user terminal is woken up. A user can be notified of a payment process by displaying the payment page, thereby improving overall interaction of the payment solution and improving payment experience of the user.

Optionally, if the user has authorized in advance payment in the near field communication manner and has authorized in advance password-free payment (for example, small-amount password-free payment), the payment can be completed without any additional operation after the user brings the user terminal to "tap" the near field communication device. Specifically, after waking up the payment application, the user terminal can automatically send the payment authorization request to the payment server when determining that the payment account in the payment application is in a logged-in state. Therefore, the payment process is more convenient. In this case, content displayed on the payment page is used only to notify the user of the payment process.

Optionally, a payment confirmation control can be displayed to the user by using the payment page. In addition, a confirmation operation performed by the user on the payment confirmation control can be obtained, and then the payment authorization request is sent to the payment server in response to the confirmation operation performed by the user, to improve a sense of interaction in a payment process of the user, and improve payment experience.

Optionally, in the embodiment described above, when the checkout terminal sends the collection indication information that carries the order amount to the near field communication terminal, the payment page link can carry the order amount, and then the order amount can be displayed on the payment page after the payment application is woken up. The order amount can be used to notify the user, to improve a sense of interaction in a payment process of the user, and improve payment experience.

Optionally, if the user does not authorize password-free payment, a payment password input control can be displayed on the payment page, so that the user enters a payment password, and then after the user terminal locally authenticates the password, the payment authorization request is sent to the payment server, or the payment authorization request that carries payment password encryption information is sent to the payment server.

In addition, in embodiments of this specification, after the sending a payment authorization request to a payment server based on the payment page link, the method can further include: receiving second payment result information sent by the payment server, where the second payment result information specifically includes second payment result first sub-information or second payment result second sub-information, the second payment result first sub-information indicates a payment success, and the second payment result second sub-information indicates a payment failure; and displaying a payment result page that includes the second payment result information.

Various technical features in the above-mentioned embodiments can be randomly combined, provided that there is no conflict or contradiction between combinations of the features. The combinations are not described one by one due to a space limitation. Therefore, any combination of the various technical features in the above-mentioned embodiments also falls within the scope disclosed in this specification.

Corresponding to the methods in FIG. 2 and FIG. 3, FIG. 4 is a schematic flowchart illustrating a near field communication-based payment method applied to a checkout terminal, according to some embodiments of this specification. From a program perspective, the procedure can be performed by a program loaded on the checkout terminal.

In embodiments of this specification, the checkout terminal is communicatively connected to a near field communication terminal in a wired manner, and the near field communication terminal is configured to provide a near field communication function to the checkout terminal.

As shown in FIG. 4, the procedure can include the following steps.

Step 402: Obtain a payment voucher from the near field communication terminal, where the payment voucher is generated by a payment server in response to a payment authorization request sent by a user terminal.

Step 404: Generate a payment request that carries the payment voucher and payment order information.

Step 406: Send the payment request to the payment server, where the payment request is used to request the payment server to perform an operation on a resource in an account corresponding to the payment voucher based on the payment order information, to complete payment.

The payment authorization request can carry a payment account number. The payment voucher generated by the payment server and sent to the near field communication terminal can be associated with the payment account number. Specifically, the payment voucher can be a voucher used to perform an operation (for example, freeze or transfer out) on a resource in an account corresponding to the payment account number. The payment server can perform an operation corresponding to the payment order information on the resource in the account corresponding to the payment account number based on the payment voucher, to complete payment. For example, if the payment order information indicates that a target quantity of resources should be paid to a collection account, the target quantity of resources can be transferred out of the account corresponding to the payment account number.

The payment account number can be an account number logged in to in a payment application on the user terminal. The payment authorization request can be sent by the user terminal by using the payment application. The payment application can be woken up based on a payment page link obtained by the user terminal from the near field communication terminal in a near field communication manner.

The payment method applied to the checkout terminal in FIG. 4 corresponds to the payment method applied to the user terminal in FIG. 3 and the payment method applied to the near field communication terminal in FIG. 2. Therefore, for a related part, references can be made to the above-mentioned descriptions. Details are omitted here for simplicity.

It should be understood that in the method in one or more embodiments of this specification, a sequence of some steps can be adjusted based on actual needs, or some steps can be omitted.

In the method in FIG. 4, the near field communication terminal is connected to the checkout terminal in a wired manner, to provide a capability of supporting near field communication payment to a checkout system. The near field communication terminal sends a payment page link to the user terminal in a near field communication manner. The user terminal initiates a payment authorization request to the payment server based on the payment page link. The payment server sends a payment voucher to the near field communication terminal in response to the payment authorization request. The near field communication terminal sends the payment voucher to the checkout terminal in a wired communication manner, to implement payment. Therefore, the capability of supporting near field communication payment is provided to the existing checkout system at relatively low costs, and a near field communication-based payment solution is provided to a user.

Based on the method in FIG. 4, embodiments of this specification further provide some improved implementations of the method, which are described below.

In one or more embodiments of this specification, before the obtaining a payment voucher from the near field communication terminal, the method can further include: sending collection indication information to the near field communication terminal, where the collection indication information is used to indicate the near field communication terminal to obtain a payment page link from the payment server, and the payment page link is used to trigger the user terminal to send the payment authorization request to the payment server. Specifically, the collection indication information can be sent to the near field communication terminal through a universal serial bus.

In practice, optionally, in a case of manual checkout, the collection indication information can be sent to the near field communication terminal in response to an operation performed by a cashier on the checkout terminal. Optionally, in a case of self-service checkout, the collection indication information can be sent to the near field communication terminal in response to an operation performed by a payment user on the checkout terminal.

In one or more embodiments of this specification, before the obtaining a payment voucher from the near field communication terminal, the method can further include: obtaining first status information sent by the near field communication terminal, where the first status information is generated by the near field communication terminal when no user terminal is detected within predetermined duration after collection indication information sent by the checkout terminal is received; generating first prompt information based on the first status information, where the first prompt information is used to prompt a user to interact with the near field communication terminal in a near field communication manner by using a user terminal; and displaying the first prompt information.

In one or more embodiments of this specification, the near field communication-based payment method applied to the checkout terminal can further include: obtaining second status information sent by the near field communication terminal, where the second status information carries device information of a user terminal that establishes a near field communication connection to the near field communication terminal, and the device information includes at least one of device hardware information or device operating system information; generating second prompt information based on the second status information, where the second prompt information is used to prompt a user with a near field communication payment procedure corresponding to the device information; and displaying the second prompt information.

In one or more embodiments of this specification, the payment server is a server corresponding to the payment application on the user terminal. In practice, the checkout device can directly interact with the payment server by using a setting, and payment settlement efficiency is higher. Alternatively, the checkout device can indirectly interact with the payment server through a checkout server corresponding to the checkout device. Therefore, costs of accessing the solution in embodiments of this specification by a merchant serving as a cashier are lower. In the latter case, the checkout terminal sends the payment request to the payment server, which can specifically include: sending a first payment request that carries the payment voucher and payment order information to a checkout server corresponding to the checkout terminal, where the first payment request is used to request the checkout server to send a second payment request to the payment server corresponding to the payment voucher, and the second payment request is used to request the payment server to perform an operation on a resource in an account corresponding to the payment voucher based on the payment order information, to complete payment.

In one or more embodiments of this specification, after the checkout terminal sends the payment request to the payment server, the method can further include: receiving third payment result information sent by the payment server, where the third payment result information specifically includes third payment result first sub-information or third payment result second sub-information, the third payment result first sub-information indicates a payment success, and the third payment result second sub-information indicates a payment failure; and displaying a payment result page that includes the third payment result information.

In one or more embodiments of this specification, the near field communication terminal is connected to the checkout terminal through a universal serial bus.

Various technical features in the above-mentioned embodiments can be randomly combined, provided that there is no conflict or contradiction between combinations of the features. The combinations are not described one by one due to a space limitation. Therefore, any combination of the various technical features in the above-mentioned embodiments also falls within the scope disclosed in this specification.

Corresponding to the methods in FIG. 2, FIG. 3, and FIG. 4, FIG. 5 is a schematic flowchart illustrating a near field communication-based payment method applied to a payment server, according to some embodiments of this specification. From a program perspective, the procedure can be performed by a program loaded on the payment server.

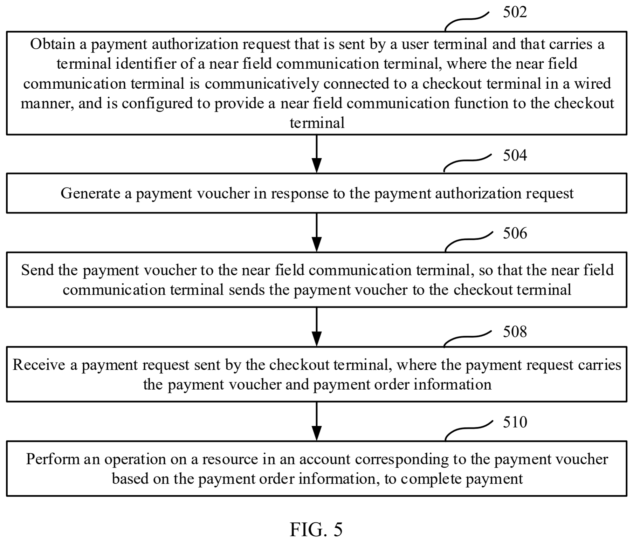

As shown in FIG. 5, the procedure can include the following steps.

Step 502: Obtain a payment authorization request that is sent by a user terminal and that carries a terminal identifier of a near field communication terminal, where the near field communication terminal is communicatively connected to a checkout terminal in a wired manner, and is configured to provide a near field communication function to the checkout terminal.

Step 504: Generate a payment voucher in response to the payment authorization request.

Step 506: Send the payment voucher to the near field communication terminal, so that the near field communication terminal sends the payment voucher to the checkout terminal.

Step 508: Receive a payment request sent by the checkout terminal, where the payment request carries the payment voucher and payment order information.

Step 510: Perform an operation on a resource in an account corresponding to the payment voucher based on the payment order information, to complete payment.

The terminal identifier carried in the payment authorization request can be obtained by the user terminal from the near field communication terminal in a near field communication manner.

The payment authorization request can carry a payment account number. The payment voucher generated by the payment server and sent to the near field communication terminal can be associated with the payment account number. The account corresponding to the payment voucher is an account represented by the payment account number. Specifically, the payment voucher can be a voucher used to perform an operation (for example, freeze or transfer out) on a resource in an account corresponding to the payment account number. The payment server can perform an operation corresponding to the payment order information on the resource in the account corresponding to the payment account number based on the payment voucher, to complete payment. For example, if the payment order information indicates that a target quantity of resources should be paid to a collection account, the target quantity of resources can be transferred out of the account corresponding to the payment account number.

The payment method applied to the payment server in FIG. 5 corresponds to the payment method applied to the checkout terminal in FIG. 4, the payment method applied to the user terminal in FIG. 3, and the payment method applied to the near field communication terminal in FIG. 2. Therefore, for a related part, references can be made to the above-mentioned descriptions. Details are omitted here for simplicity.

It should be understood that in the method in one or more embodiments of this specification, a sequence of some steps can be adjusted based on actual needs, or some steps can be omitted.

In the method in FIG. 5, the near field communication terminal is connected to the checkout terminal in a wired manner, to provide a capability of supporting near field communication payment to a checkout system. The near field communication terminal sends a payment page link to the user terminal in a near field communication manner. The user terminal initiates a payment authorization request to the payment server based on the payment page link. The payment server sends a payment voucher to the near field communication terminal in response to the payment authorization request. The near field communication terminal sends the payment voucher to the checkout terminal in a wired communication manner, to implement payment. Therefore, the capability of supporting near field communication payment is provided to the existing checkout system at relatively low costs, and a near field communication-based payment solution is provided to a user.

Based on the method in FIG. 5, embodiments of this specification further provide some improved implementations of the method, which are described below.

In one or more embodiments of this specification, before the obtaining a payment authorization request that is sent by a user terminal and that carries a terminal identifier of a near field communication terminal, the method can further include: obtaining a payment page link acquisition request sent by the near field communication terminal; generating a payment page link in response to the payment page link acquisition request; and sending the payment page link to the near field communication terminal.

In one or more embodiments of this specification, after the performing an operation on a resource in an account corresponding to the payment voucher based on the payment order information, to complete payment, the method can further include: sending first payment result information to the near field communication terminal, where the first payment result information specifically includes first payment result first sub-information or first payment result second sub-information, the first payment result first sub-information indicates a payment success, and the first payment result second sub-information indicates a payment failure; and the first payment result information is used to indicate the near field communication terminal to send transaction result prompt information corresponding to the first payment result information.

In one or more embodiments of this specification, after the performing an operation on a resource in an account corresponding to the payment voucher based on the payment order information, to complete payment, the method can further include: sending second payment result information to the user terminal, where the second payment result information specifically includes second payment result first sub-information or second payment result second sub-information, the second payment result first sub-information indicates a payment success, and the second payment result second sub-information indicates a payment failure; and the second payment result information is used to be displayed on a payment result page of the user terminal.

In one or more embodiments of this specification, after the performing an operation on a resource in an account corresponding to the payment voucher based on the payment order information, to complete payment, the method can further include: sending third payment result information to the checkout terminal. The third payment result information specifically includes third payment result first sub-information or third payment result second sub-information, the third payment result first sub-information indicates a payment success, and the third payment result second sub-information indicates a payment failure.

The payment result information can include payment success result information or payment failure result information. The first payment result information, the second payment result information, and the third payment result information can include payment results consistent with each other. For example, if the first payment result information is specifically the first payment result first sub-information indicating a payment success, the second payment result information is specifically the second payment result first sub-information indicating a payment success, and the third payment result information is specifically the third payment result first sub-information indicating a payment success. First, second, and third in the naming of the first payment result information, the second payment result information, and the third payment result information are merely used to distinguish between the payment result information received by the near field communication terminal, the user terminal, and the checkout terminal.

In one or more embodiments of this specification, the receiving a payment request sent by the checkout terminal can specifically include: receiving a second payment request that is sent by a checkout server corresponding to the checkout terminal and that carries the payment voucher, where the second payment request is generated by the checkout server in response to the first payment request that is sent by the checkout terminal and that carries the payment voucher.

Various technical features in the above-mentioned embodiments can be randomly combined, provided that there is no conflict or contradiction between combinations of the features. The combinations are not described one by one due to a space limitation. Therefore, any combination of the various technical features in the above-mentioned embodiments also falls within the scope disclosed in this specification.

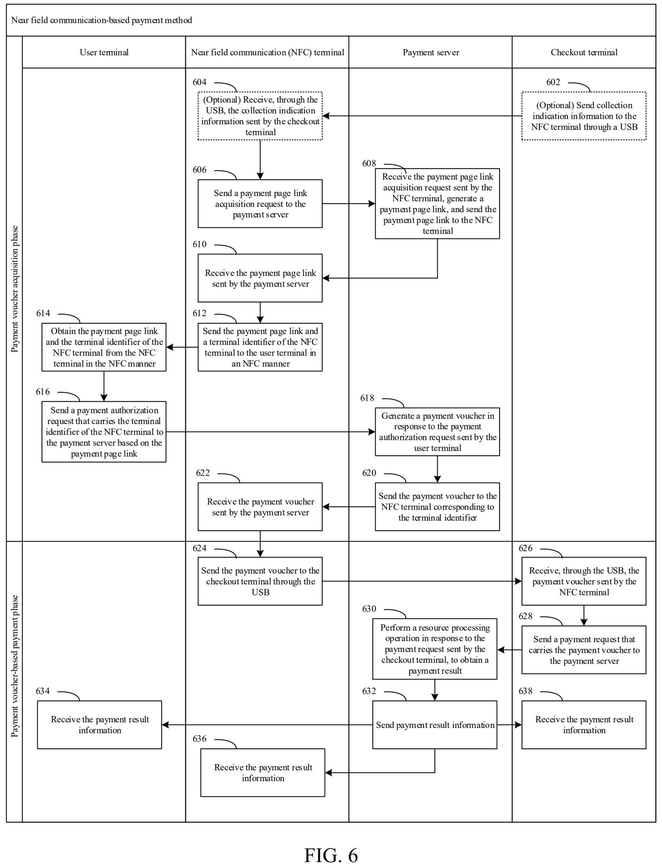

Based on the above-mentioned descriptions, a schematic flowchart illustrating a near field communication-based payment method in an actual application scenario according to some embodiments of this specification is shown in FIG. 6.

In FIG. 6, in a first phase, that is, a payment voucher acquisition phase, through S602 to S622, a near field communication terminal obtains a payment voucher used for payment.

S602: Optionally, a checkout terminal can send collection indication information to an NFC terminal. Optionally, the collection indication information can be sent through a USB. Specifically, when the checkout terminal is in a USB bulk communication mode, the collection indication information can be sent to the NFC terminal.

S604: Optionally, the NFC terminal can receive the collection indication information sent by the checkout terminal, which corresponds to S602.

S606: The NFC terminal sends a payment page link acquisition request to a payment server.

Optionally, if the USB bulk communication mode is used between the NFC terminal and the checkout terminal, the payment page link acquisition request can be sent to the payment server after the collection indication information is received.

Optionally, if a USB HID communication mode is used between the NFC terminal and the checkout terminal, the payment page link acquisition request can be sent to the payment server based on a predetermined payment page link acquisition period or after payment for a previous order is completed.

S608: The payment server receives the payment page link acquisition request sent by the NFC terminal device, generates a payment page link, and sends the payment page link to the NFC terminal, which corresponds to S606.

S610: The NFC terminal receives the payment page link sent by the payment server, which corresponds to S608.

S612: The NFC terminal sends the payment page link and a terminal identifier of the NFC terminal to a user terminal in an NFC manner.

S614: The user terminal obtains the payment page link and the terminal identifier of the NFC terminal from the NFC terminal in the NFC manner, which corresponds to S612.

S616: The user terminal sends a payment authorization request that carries the terminal identifier of the NFC terminal to the payment server based on the payment page link.

S618: The payment server generates a payment voucher in response to the payment authorization request sent by the user terminal.

S620: The payment server sends the payment voucher to the NFC terminal corresponding to the terminal identifier.

S622: The NFC terminal receives the payment voucher sent by the payment server, which corresponds to S620.

Then, in a second phase, that is, a payment voucher-based payment phase, through S624 to S638, payment is implemented on a checkout side based on the payment voucher obtained from the near field communication terminal.

S624: The NFC terminal sends the payment voucher to the checkout terminal. Optionally, the payment voucher can be sent to the checkout terminal through the USB.

S626: The checkout terminal receives, through the USB, the payment voucher sent by the NFC terminal, which corresponds to S624.

S628: The checkout terminal sends a payment request that carries the payment voucher to the payment server.

S630: The payment server performs a resource processing operation in response to the payment request sent by the checkout terminal, to obtain a payment result, which corresponds to S628.

S632: Optionally, the payment server can send payment result information to at least one of the user terminal, the NFC terminal, or the checkout terminal.

S634: The user terminal receives the payment result information from the payment server, which corresponds to S632.

S636: The NFC terminal receives the payment result information from the payment server, which corresponds to S632.

S638: The checkout terminal receives the payment result information from the payment server, which corresponds to S632.

It can be understood that the steps shown in FIG. 6 are only a specific form of implementing the solution in embodiments of this specification. In practice, a sequence of the steps can be adjusted, a step can be added, or a step can be deleted based on needs.

Based on the same idea, embodiments of this specification further provide apparatuses corresponding to the above-mentioned methods.

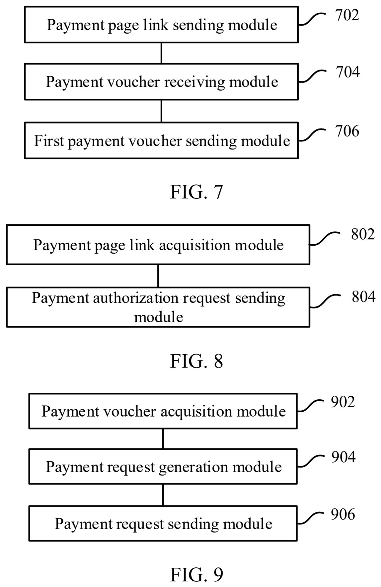

FIG. 7 is a schematic diagram illustrating a structure of a near field communication-based payment apparatus applied to a near field communication terminal and corresponding to FIG. 2, according to some embodiments of this specification.

In embodiments of this specification, the near field communication terminal is communicatively connected to a checkout terminal in a wired manner, and is configured to provide a near field communication function to the checkout terminal.

As shown in FIG. 7, the near field communication-based payment apparatus applied to the near field communication terminal can include: a payment page link sending module 702, configured to send a payment page link to a user terminal in a near field communication manner, where the payment page link is used to trigger the user terminal to send a payment authorization request to a payment server; a payment voucher receiving module 704, configured to receive a payment voucher sent by the payment server, where the payment voucher is generated by the payment server in response to the payment authorization request; and a first payment voucher sending module 706, configured to send the payment voucher to the checkout terminal, where the payment voucher is used to be sent by the checkout terminal together with payment order information to the payment server, to complete payment.

Based on the apparatus in FIG. 7, embodiments of this specification further provide some specific implementations of the method, which are described below.

Optionally, the payment apparatus further includes a payment page link acquisition module, configured to: send a payment page link acquisition request to the payment server; and receive a payment page link returned by the payment server in response to the payment page link acquisition request.

Optionally, the sending a payment page link acquisition request to the payment server can specifically include: sending the payment page link acquisition request to the payment server based on a predetermined payment page link acquisition period or after payment for a previous order is completed.

Optionally, the sending a payment page link acquisition request to the payment server can specifically include: receiving collection indication information sent by the checkout terminal; and sending the payment page link acquisition request to the payment server in response to the collection indication information.

Optionally, the payment apparatus further includes a first status detection module, configured to: determine whether a user terminal is detected within predetermined duration after collection indication information sent by the checkout terminal is received; and send first status information to the checkout terminal if no user terminal is detected within the predetermined duration, where the first status information is used to indicate the checkout terminal to display first prompt information, and the first prompt information is used to prompt a user to interact with the near field communication terminal in the near field communication manner by using a user terminal.

Optionally, the payment apparatus further includes a second status detection module, configured to: obtain device information of the user terminal, where the device information includes at least one of device hardware information or device operating system information; and send second status information that carries the device information to the checkout terminal, where the second status information is used to indicate the checkout terminal to display second prompt information, and the second prompt information is used to prompt a user with a near field communication payment procedure corresponding to the device information.

Optionally, the payment apparatus further includes a payment result information processing module, configured to: receive first payment result information sent by the payment server, where the first payment result information specifically includes first payment result first sub-information or first payment result second sub-information, the first payment result first sub-information indicates a payment success, and the first payment result second sub-information indicates a payment failure; and send transaction result prompt information corresponding to the first payment result information, where a display manner of the transaction result prompt information includes at least one of a voice form or an indicator form.

Optionally, the near field communication terminal is connected to the checkout terminal through a universal serial bus.

It can be understood that the above-mentioned modules refer to computer programs or program segments, and are configured to perform one or more specific functions. In addition, distinction between the above-mentioned modules does not indicate that actual program code needs to be separated.

A schematic solution of the near field communication-based payment apparatus applied to the near field communication terminal in the embodiments is described above. It is worthwhile to note that the technical solution of the near field communication-based payment apparatus applied to the near field communication terminal belongs to the same concept as the technical solution of the near field communication-based payment method applied to the near field communication terminal. For detailed content not described in detail in the technical solution of the near field communication-based payment apparatus applied to the near field communication terminal, references can be made to the descriptions of the technical solution of the near field communication-based payment method applied to the near field communication terminal.

FIG. 8 is a schematic diagram illustrating a structure of a near field communication-based payment apparatus applied to a user terminal and corresponding to FIG. 3, according to some embodiments of this specification.

As shown in FIG. 8, the apparatus can include: a payment page link acquisition module 802, configured to obtain a payment page link from a near field communication terminal in a near field communication manner, where the near field communication terminal is communicatively connected to a checkout terminal in a wired manner, and is configured to provide a near field communication function to the checkout terminal; and a payment authorization request sending module 804, configured to send a payment authorization request to a payment server based on the payment page link, where the payment authorization request is used to authorize the payment server to send a payment voucher to the near field communication terminal, and the payment voucher is used to be sent by the near field communication terminal together with payment order information to the checkout terminal, to complete payment.

Based on the apparatus in FIG. 8, embodiments of this specification further provide some specific implementations of the method, which are described below.

Optionally, the payment authorization request sending module 804 is specifically configured to: wake up a payment application corresponding to the payment page link; and send the payment authorization request to the payment server corresponding to the payment application.

It can be understood that the above-mentioned modules refer to computer programs or program segments, and are configured to perform one or more specific functions. In addition, distinction between the above-mentioned modules does not indicate that actual program code needs to be separated.

A schematic solution of the near field communication-based payment apparatus applied to the user terminal in the embodiments is described above. It is worthwhile to note that the technical solution of the near field communication-based payment apparatus applied to the user terminal belongs to the same concept as the technical solution of the near field communication-based payment method applied to the user terminal. For detailed content not described in detail in the technical solution of the near field communication-based payment apparatus applied to the user terminal, references can be made to the descriptions of the technical solution of the near field communication-based payment method applied to the user terminal.

FIG. 9 is a schematic diagram illustrating a structure of a near field communication-based payment apparatus applied to a checkout terminal and corresponding to FIG. 4, according to some embodiments of this specification.

In embodiments of this specification, the checkout terminal is communicatively connected to a near field communication terminal in a wired manner, and the near field communication terminal is configured to provide a near field communication function to the checkout terminal.

As shown in FIG. 9, the apparatus can include: a payment voucher acquisition module 902, configured to obtain a payment voucher from the near field communication terminal, where the payment voucher is generated by a payment server in response to a payment authorization request sent by a user terminal; a payment request generation module 904, configured to generate a payment request that carries the payment voucher and payment order information; and a payment request sending module 906, configured to send the payment request to the payment server, where the payment request is used to request the payment server to perform an operation on a resource in an account corresponding to the payment voucher based on the payment order information, to complete payment.

Based on the apparatus in FIG. 9, embodiments of this specification further provide some specific implementations of the method, which are described below.

Optionally, the apparatus can further include a collection indication information sending module, configured to send collection indication information to the near field communication terminal, where the collection indication information is used to indicate the near field communication terminal to obtain a payment page link from the payment server, and the payment page link is used to trigger the user terminal to send the payment authorization request to the payment server.

Optionally, the apparatus further includes a first status information processing module, configured to: obtain first status information sent by the near field communication terminal, where the first status information is generated by the near field communication terminal when no user terminal is detected within predetermined duration after collection indication information sent by the checkout terminal is received; generate first prompt information based on the first status information, where the first prompt information is used to prompt a user to interact with the near field communication terminal in a near field communication manner by using a user terminal; and display the first prompt information.

Optionally, the apparatus further includes a second status information processing module, configured to: obtain second status information sent by the near field communication terminal, where the second status information carries device information of a user terminal that establishes a near field communication connection to the near field communication terminal, and the device information includes at least one of device hardware information or device operating system information; generate second prompt information based on the second status information, where the second prompt information is used to prompt a user with a near field communication payment procedure corresponding to the device information; and display the second prompt information.

Optionally, the near field communication terminal is connected to the checkout terminal through a universal serial bus.

It can be understood that the above-mentioned modules refer to computer programs or program segments, and are configured to perform one or more specific functions. In addition, distinction between the above-mentioned modules does not indicate that actual program code needs to be separated.

A schematic solution of the near field communication-based payment apparatus applied to the checkout terminal in the embodiments is described above. It is worthwhile to note that the technical solution of the near field communication-based payment apparatus applied to the checkout terminal belongs to the same concept as the technical solution of the near field communication-based payment method applied to the checkout terminal. For detailed content not described in detail in the technical solution of the near field communication-based payment apparatus applied to the checkout terminal, references can be made to the descriptions of the technical solution of the near field communication-based payment method applied to the checkout terminal.

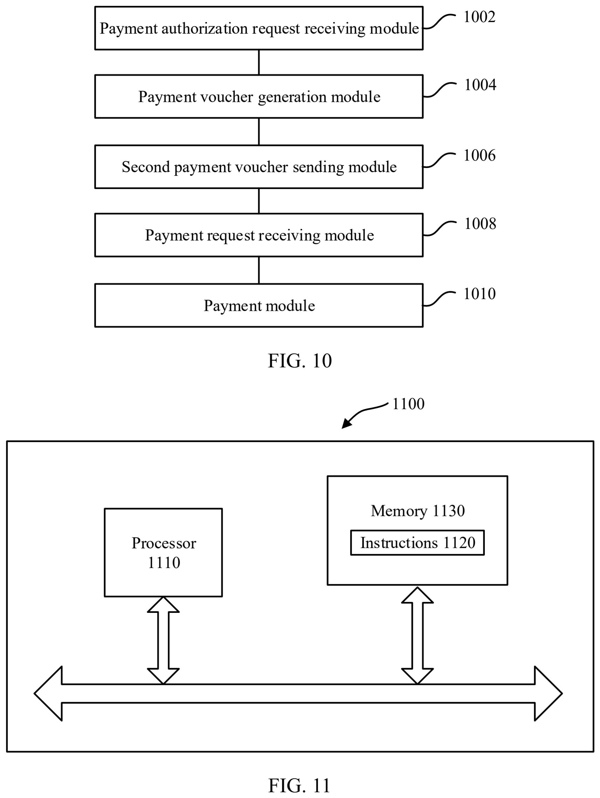

FIG. 10 is a schematic diagram illustrating a structure of a near field communication-based payment apparatus applied to a payment server and corresponding to FIG. 5, according to some embodiments of this specification.

As shown in FIG. 10, the apparatus can include: a payment authorization request receiving module 1002, configured to obtain a payment authorization request that is sent by a user terminal and that carries a terminal identifier of a near field communication terminal, where the near field communication terminal is communicatively connected to a checkout terminal in a wired manner, and is configured to provide a near field communication function to the checkout terminal; a payment voucher generation module 1004, configured to generate a payment voucher in response to the payment authorization request; a second payment voucher sending module 1006, configured to send the payment voucher to the near field communication terminal, so that the near field communication terminal sends the payment voucher to the checkout terminal; a payment request receiving module 1008, configured to receive a payment request sent by the checkout terminal, where the payment request carries the payment voucher and payment order information; and a payment module 1010, configured to perform an operation on a resource in an account corresponding to the payment voucher based on the payment order information, to complete payment.

Based on the apparatus in FIG. 10, embodiments of this specification further provide some specific implementations of the method, which are described below.

Optionally, the apparatus further includes a payment page link generation module, configured to: obtain a payment page link acquisition request sent by the near field communication terminal; generate a payment page link in response to the payment page link acquisition request; and send the payment page link to the near field communication terminal.

Optionally, the apparatus further includes a payment result information sending module, configured to send first payment result information to the near field communication terminal after an operation is performed on the resource in the account corresponding to the payment voucher based on the payment order information, to complete payment, where the first payment result information specifically includes first payment result first sub-information or first payment result second sub-information, the first payment result first sub-information indicates a payment success, and the first payment result second sub-information indicates a payment failure; and the first payment result information is used to indicate the near field communication terminal to send transaction result prompt information corresponding to the first payment result information.

It can be understood that the above-mentioned modules refer to computer programs or program segments, and are configured to perform one or more specific functions. In addition, distinction between the above-mentioned modules does not indicate that actual program code needs to be separated.

A schematic solution of the near field communication-based payment apparatus applied to the payment server in the embodiments is described above. It is worthwhile to note that the technical solution of the near field communication-based payment apparatus applied to the payment server belongs to the same concept as the technical solution of the near field communication-based payment method applied to the payment server. For detailed content not described in detail in the technical solution of the near field communication-based payment apparatus applied to the payment server, references can be made to the descriptions of the technical solution of the near field communication-based payment method applied to the payment server.

Corresponding to the near field communication-based payment method and payment apparatus, embodiments of this specification further provide a near field communication-based payment system. For a schematic diagram of the payment system, references can be partially made to FIG. 1.

The payment system can include a near field communication terminal, a checkout terminal, and a payment server. The near field communication terminal is communicatively connected to the checkout terminal in a wired manner, and is configured to provide a near field communication function to the checkout terminal.

The near field communication terminal is configured to send a payment page link to a user terminal in a near field communication manner, where the payment page link is used to trigger the user terminal to send a payment authorization request to the payment server.

The payment server is configured to: receive the payment authorization request sent by the user terminal; generate a payment voucher in response to the payment authorization request; and send the payment voucher to the near field communication terminal.

The near field communication terminal is further configured to: receive the payment voucher sent by the payment server; and send the payment voucher to the checkout terminal.

The checkout terminal is configured to generate a payment request that carries the payment voucher and payment order information.

The payment server is further configured to perform an operation on a resource in an account corresponding to the payment voucher based on the payment order information in response to the payment request from the checkout terminal, to complete payment.

Optionally, the near field communication terminal is connected to the checkout terminal through a universal serial bus.

Based on the same idea, embodiments of this specification further provide a computing device corresponding to the near field communication-based payment method.

FIG. 11 is a schematic diagram illustrating a structure of a computing device, according to some embodiments of this specification.

As shown in FIG. 11, the device 1100 can include: at least one processor 1110; and a memory 1130 communicatively connected to the at least one processor.

The memory 1130 stores instructions 1120 executable by the at least one processor 1110, and the instructions 1120 are executed by the at least one processor 1110, to enable the at least one processor 1110 to perform the following operations: sending a payment page link to a user terminal in a near field communication manner, where the payment page link is used to trigger the user terminal to send a payment authorization request to a payment server; receiving a payment voucher sent by the payment server, where the payment voucher is generated by the payment server in response to the payment authorization request; and sending the payment voucher to the checkout terminal, where the payment voucher is used to be sent by the checkout terminal together with payment order information to the payment server, to complete payment.

Alternatively, the at least one processor 1110 is enabled to perform the following operations: obtaining a payment page link from a near field communication terminal in a near field communication manner, where the near field communication terminal is communicatively connected to a checkout terminal in a wired manner, and is configured to provide a near field communication function to the checkout terminal; and sending a payment authorization request to a payment server based on the payment page link, where the payment authorization request is used to authorize the payment server to send a payment voucher to the near field communication terminal, and the payment voucher is used to be sent by the near field communication terminal together with payment order information to the checkout terminal, to complete payment.

Alternatively, the at least one processor 1110 is enabled to perform the following operations: obtaining a payment voucher from the near field communication terminal, where the payment voucher is generated by a payment server in response to a payment authorization request sent by a user terminal; generating a payment request that carries the payment voucher and payment order information; and sending the payment request to the payment server, where the payment request is used to request the payment server to perform an operation on a resource in an account corresponding to the payment voucher based on the payment order information, to complete payment.

Alternatively, the at least one processor 1110 is enabled to perform the following operations: obtaining a payment authorization request that is sent by a user terminal and that carries a terminal identifier of a near field communication terminal, where the near field communication terminal is communicatively connected to a checkout terminal in a wired manner, and is configured to provide a near field communication function to the checkout terminal; generating a payment voucher in response to the payment authorization request; sending the payment voucher to the near field communication terminal, so that the near field communication terminal sends the payment voucher to the checkout terminal; receiving a payment request sent by the checkout terminal, where the payment request carries the payment voucher and payment order information; and performing an operation on a resource in an account corresponding to the payment voucher based on the payment order information, to complete payment.

A schematic solution of the computing device in the embodiments is described above. It is worthwhile to note that the technical solution of the computing device belongs to the same concept as the technical solution of the near field communication-based payment method. For detailed content not described in detail in the technical solution of the computing device, references can be made to the descriptions of the technical solution of the near field communication-based payment method.

The embodiments of this specification are described in a progressive manner. For same or similar parts of the embodiments, mutual references can be made to the embodiments. Each embodiment focuses on a difference from other embodiments. Particularly, the apparatus, system, and device embodiments are basically similar to the method embodiments, and therefore are described briefly. For related parts, references can be made to some descriptions in the method embodiments. The apparatus, the system, and the device provided in the embodiments of this specification correspond to the method. Therefore, the apparatus, the system, and the device also have beneficial technical effects similar to those of the corresponding method. Because the beneficial technical effects of the method are described above in detail, the beneficial technical effects of the corresponding apparatus, system, and device are not described here.

Specific embodiments of this application are described above. Other embodiments fall within the scope of the appended claims. In some cases, the actions or steps described in the claims can be performed in a sequence different from that in the embodiments, and the desired results can still be achieved. In addition, the process depicted in the accompanying drawings does not necessarily need a particular sequence or consecutive sequence to achieve the desired results. In some implementations, multitasking and parallel processing are feasible or may be advantageous.

The system, apparatus, module, or unit described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is separately described by dividing the apparatus into various units based on functions. Certainly, when this application is implemented, the functions of the units can be implemented in one or more pieces of software and/or hardware.

A person skilled in the art should understand that the embodiments of the present invention can be provided as methods, systems, or computer program products. Therefore, the present invention can use a form of hardware only embodiments, software only embodiments, or embodiments with a combination of software and hardware. In addition, the present invention can use a form of a computer program product implemented on one or more computer-usable storage media (including but not limited to a magnetic disk memory, a CD-ROM, an optical memory, etc.) including computer-usable program code.

The present invention is described with reference to the flowcharts and/or block diagrams of the method, the device (system), and the computer program product according to the embodiments of the present invention. It should be understood that computer program instructions can be used to implement each procedure and/or block in the flowcharts and/or the block diagrams and a combination of procedures and/or blocks in the flowcharts and/or the block diagrams. These computer program instructions can be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is worthwhile to further note that the terms "include", "comprise", or any other variants thereof are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes a ..." does not preclude the presence of additional identical elements in the process, method, product, or device that includes the element.

This application can be described in the general context of computer-executable instructions, for example, a program module. Usually, the program module includes a routine, a program, an object, a component, a data structure, etc. for executing a specific task or implementing a specific abstract data type. This application can alternatively be practiced in distributed computing environments. In the distributed computing environments, tasks are executed by remote processing devices connected through a communication network. In the distributed computing environments, the program module can be located in both local and remote computer storage media including storage devices.

The above-mentioned descriptions are merely embodiments of this application, and are not intended to limit this application. A person skilled in the art can make various modifications and changes to this application. Any modification, equivalent replacement, improvement, etc. made without departing from the spirit and principle of this application shall fall within the scope of the claims of this application.

### EXAMPLES

Although the present invention is defined in the claims, it should be understood that the present invention can also (alternatively) be defined in accordance with the following examples:
1. A near field communication-based payment method, applied to a near field communication terminal, wherein the near field communication terminal is communicatively connected to a checkout terminal in a wired manner, and is configured to provide a near field communication function to the checkout terminal, and the method comprises:
   sending a payment page link to a user terminal in a near field communication manner, wherein the payment page link is used to trigger the user terminal to send a payment authorization request to a payment server;
   receiving a payment voucher sent by the payment server, wherein the payment voucher is generated by the payment server in response to the payment authorization request; and
   sending the payment voucher to the checkout terminal, wherein the payment voucher is used to be sent by the checkout terminal together with payment order information to the payment server, to complete payment.
2. The method according to example 1, before the sending a payment page link to a user terminal in a near field communication manner, further comprising:
   sending a payment page link acquisition request to the payment server; and
   receiving a payment page link returned by the payment server in response to the payment page link acquisition request.
3. The method according to example 2, wherein the sending a payment page link acquisition request to the payment server specifically comprises:
   sending the payment page link acquisition request to the payment server based on a predetermined payment page link acquisition period or after payment for a previous order is completed.
4. The method according to example 2, wherein the sending a payment page link acquisition request to the payment server specifically comprises:
   receiving collection indication information sent by the checkout terminal; and
   sending the payment page link acquisition request to the payment server in response to the collection indication information.
5. The method according to example 1, before the sending a payment page link to a user terminal in a near field communication manner, further comprising:
   determining whether a user terminal is detected within predetermined duration after collection indication information sent by the checkout terminal is received; and
   sending first status information to the checkout terminal if no user terminal is detected within the predetermined duration, wherein the first status information is used to indicate the checkout terminal to display first prompt information, and the first prompt information is used to prompt a user to interact with the near field communication terminal in the near field communication manner by using a user terminal.
6. The method according to example 1, further comprising:
   obtaining device information of the user terminal, wherein the device information comprises at least one of device hardware information or device operating system information; and
   sending second status information that carries the device information to the checkout terminal, wherein the second status information is used to indicate the checkout terminal to display second prompt information, and the second prompt information is used to prompt a user with a near field communication payment procedure corresponding to the device information.
7. The method according to example 1, after the sending the payment voucher to the checkout terminal, further comprising:
   receiving first payment result information sent by the payment server, wherein the first payment result information specifically comprises first payment result first sub-information or first payment result second sub-information, the first payment result first sub-information indicates a payment success, and the first payment result second sub-information indicates a payment failure; and
   sending transaction result prompt information corresponding to the first payment result information, wherein a display manner of the transaction result prompt information comprises at least one of a voice form or an indicator form.
8. The method according to any one of examples 1 to 7, wherein the near field communication terminal is connected to the checkout terminal through a universal serial bus.
9. A near field communication-based payment method, applied to a user terminal, wherein the method comprises:
   obtaining a payment page link from a near field communication terminal in a near field communication manner, wherein the near field communication terminal is communicatively connected to a checkout terminal in a wired manner, and is configured to provide a near field communication function to the checkout terminal; and
   sending a payment authorization request to a payment server based on the payment page link, wherein the payment authorization request is used to authorize the payment server to send a payment voucher to the near field communication terminal, and the payment voucher is used to be sent by the near field communication terminal together with payment order information to the checkout terminal, to complete payment.
10. The method according to example 9, wherein the sending a payment authorization request to a payment server based on the payment page link specifically comprises:
   waking up a payment application corresponding to the payment page link; and
   sending the payment authorization request to the payment server corresponding to the payment application.
11. A near field communication-based payment method, applied to a checkout terminal, wherein the checkout terminal is communicatively connected to a near field communication terminal in a wired manner, the near field communication terminal is configured to provide a near field communication function to the checkout terminal, and the method comprises:
   obtaining a payment voucher from the near field communication terminal, wherein the payment voucher is generated by a payment server in response to a payment authorization request sent by a user terminal;
   generating a payment request that carries the payment voucher and payment order information; and
   sending the payment request to the payment server, wherein the payment request is used to request the payment server to perform an operation on a resource in an account corresponding to the payment voucher based on the payment order information, to complete payment.
12. The method according to example 11, before the obtaining a payment voucher from the near field communication terminal, further comprising:
   sending collection indication information to the near field communication terminal, wherein the collection indication information is used to indicate the near field communication terminal to obtain a payment page link from the payment server, and the payment page link is used to trigger the user terminal to send the payment authorization request to the payment server.
13. The method according to example 11, before the obtaining a payment voucher from the near field communication terminal, further comprising:
   obtaining first status information sent by the near field communication terminal, wherein the first status information is generated by the near field communication terminal when no user terminal is detected within predetermined duration after collection indication information sent by the checkout terminal is received;
   generating first prompt information based on the first status information, wherein the first prompt information is used to prompt a user to interact with the near field communication terminal in a near field communication manner by using a user terminal; and
   displaying the first prompt information.
14. The method according to example 11, further comprising:
   obtaining second status information sent by the near field communication terminal, wherein the second status information carries device information of a user terminal that establishes a near field communication connection to the near field communication terminal, and the device information comprises at least one of device hardware information or device operating system information;
   generating second prompt information based on the second status information, wherein the second prompt information is used to prompt a user with a near field communication payment procedure corresponding to the device information; and
   displaying the second prompt information.
15. The method according to any one of examples 11 to 14, wherein the near field communication terminal is connected to the checkout terminal through a universal serial bus.
16. A near field communication-based payment method, applied to a payment server, wherein the method comprises:
   obtaining a payment authorization request that is sent by a user terminal and that carries a terminal identifier of a near field communication terminal, wherein the near field communication terminal is communicatively connected to a checkout terminal in a wired manner, and is configured to provide a near field communication function to the checkout terminal;
   generating a payment voucher in response to the payment authorization request;
   sending the payment voucher to the near field communication terminal, so that the near field communication terminal sends the payment voucher to the checkout terminal;
   receiving a payment request sent by the checkout terminal, wherein the payment request carries the payment voucher and payment order information; and
   performing an operation on a resource in an account corresponding to the payment voucher based on the payment order information, to complete payment.
17. The method according to example 16, before the obtaining a payment authorization request that is sent by a user terminal and that carries a terminal identifier of a near field communication terminal, further comprising:
   obtaining a payment page link acquisition request sent by the near field communication terminal;
   generating a payment page link in response to the payment page link acquisition request; and
   sending the payment page link to the near field communication terminal.
18. The method according to example 16, after the performing an operation on a resource in an account corresponding to the payment voucher based on the payment order information, further comprising:
   sending first payment result information to the near field communication terminal, wherein the first payment result information specifically comprises first payment result first sub-information or first payment result second sub-information, the first payment result first sub-information indicates a payment success, and the first payment result second sub-information indicates a payment failure; and the first payment result information is used to indicate the near field communication terminal to send transaction result prompt information corresponding to the first payment result information.
19. A near field communication-based payment apparatus, applied to a near field communication terminal, wherein the near field communication terminal is communicatively connected to a checkout terminal in a wired manner, and is configured to provide a near field communication function to the checkout terminal, and the apparatus comprises:
   a payment page link sending module, configured to send a payment page link to a user terminal in a near field communication manner, wherein the payment page link is used to trigger the user terminal to send a payment authorization request to a payment server;
   a payment voucher receiving module, configured to receive a payment voucher sent by the payment server, wherein the payment voucher is generated by the payment server in response to the payment authorization request; and
   a first payment voucher sending module, configured to send the payment voucher to the checkout terminal, wherein the payment voucher is used to be sent by the checkout terminal together with payment order information to the payment server, to complete payment.
20. A near field communication-based payment apparatus, applied to a user terminal, wherein the apparatus comprises:
   a payment page link acquisition module, configured to obtain a payment page link from a near field communication terminal in a near field communication manner, wherein the near field communication terminal is communicatively connected to a checkout terminal in a wired manner, and is configured to provide a near field communication function to the checkout terminal; and
   a payment authorization request sending module, configured to send a payment authorization request to a payment server based on the payment page link, wherein the payment authorization request is used to authorize the payment server to send a payment voucher to the near field communication terminal, and the payment voucher is used to be sent by the near field communication terminal together with payment order information to the checkout terminal, to complete payment.
21. A near field communication-based payment apparatus, applied to a checkout terminal, wherein the checkout terminal is communicatively connected to a near field communication terminal in a wired manner, the near field communication terminal is configured to provide a near field communication function to the checkout terminal, and the apparatus comprises:
   a payment voucher acquisition module, configured to obtain a payment voucher from the near field communication terminal, wherein the payment voucher is generated by a payment server in response to a payment authorization request sent by a user terminal;
   a payment request generation module, configured to generate a payment request that carries the payment voucher and payment order information; and
   a payment request sending module, configured to send the payment request to the payment server, wherein the payment request is used to request the payment server to perform an operation on a resource in an account corresponding to the payment voucher based on the payment order information, to complete payment.
22. A near field communication-based payment apparatus, applied to a payment server, wherein the apparatus comprises:
   a payment authorization request receiving module, configured to obtain a payment authorization request that is sent by a user terminal and that carries a terminal identifier of a near field communication terminal, wherein the near field communication terminal is communicatively connected to a checkout terminal in a wired manner, and is configured to provide a near field communication function to the checkout terminal;
   a payment voucher generation module, configured to generate a payment voucher in response to the payment authorization request;
   a second payment voucher sending module, configured to send the payment voucher to the near field communication terminal, so that the near field communication terminal sends the payment voucher to the checkout terminal;
   a payment request receiving module, configured to receive a payment request sent by the checkout terminal, wherein the payment request carries the payment voucher and payment order information; and
   a payment module, configured to perform an operation on a resource in an account corresponding to the payment voucher based on the payment order information, to complete payment.
23. A near field communication-based payment system, comprising a near field communication terminal, a checkout terminal, and a payment server, wherein the near field communication terminal is communicatively connected to the checkout terminal in a wired manner, and is configured to provide a near field communication function to the checkout terminal;
   the near field communication terminal is configured to send a payment page link to a user terminal in a near field communication manner, wherein the payment page link is used to trigger the user terminal to send a payment authorization request to the payment server;
   the payment server is configured to: receive the payment authorization request sent by the user terminal; generate a payment voucher in response to the payment authorization request; and send the payment voucher to the near field communication terminal;
   the near field communication terminal is further configured to: receive the payment voucher sent by the payment server; and send the payment voucher to the checkout terminal;
   the checkout terminal is configured to generate a payment request that carries the payment voucher and payment order information; and
   the payment server is further configured to perform an operation on a resource in an account corresponding to the payment voucher based on the payment order information in response to the payment request from the checkout terminal, to complete payment.
24. The system according to example 23, wherein the near field communication terminal is connected to the checkout terminal through a universal serial bus.
25. A computing device, comprising:
   at least one processor; and
   a memory communicatively connected to the at least one processor, wherein
   the memory stores instructions executable by the at least one processor, and the instructions are executed by the at least one processor, to enable the at least one processor to perform the steps in the method according to any one of examples 1 to 18.

## Claims

1. A near field communication-based payment method performed by a near field communication terminal, wherein the near field communication terminal is communicatively connected to a checkout terminal in a wired manner, and is configured to provide a near field communication function to the checkout terminal, and the method comprises:
sending a payment page link to a user terminal in a near field communication manner, wherein the payment page link is used to trigger the user terminal to send a payment authorization request to a payment server;
receiving a payment voucher sent by the payment server, wherein the payment voucher is generated by the payment server in response to the payment authorization request; and
sending the payment voucher to the checkout terminal, wherein the payment voucher is used to be sent by the checkout terminal together with payment order information to the payment server, to complete payment.

2. The method according to claim 1, before the sending a payment page link to a user terminal in a near field communication manner, further comprising:
sending a payment page link acquisition request to the payment server; and
receiving a payment page link returned by the payment server in response to the payment page link acquisition request; optionally
wherein sending the payment page link acquisition request to the payment server comprises:
sending the payment page link acquisition request to the payment server based on a predetermined payment page link acquisition period or after payment for a previous order is completed; or
receiving collection indication information sent by the checkout terminal, and
sending the payment page link acquisition request to the payment server in response to the collection indication information.

3. The method according to any one of claims 1 or 2, further comprising:
before sending the payment page link to a user terminal in a near field communication manner,
determining whether a user terminal is detected within predetermined duration after collection indication information sent by the checkout terminal is received, and
sending first status information to the checkout terminal if no user terminal is detected within the predetermined duration, wherein the first status information is used to indicate the checkout terminal to display first prompt information, and the first prompt information is used to prompt a user to interact with the near field communication terminal in the near field communication manner by using a user terminal; and/or
obtaining device information of the user terminal, wherein the device information comprises at least one of device hardware information or device operating system information, and
sending second status information that carries the device information to the checkout terminal, wherein the second status information is used to indicate the checkout terminal to display second prompt information, and the second prompt information is used to prompt a user with a near field communication payment procedure corresponding to the device information; and/or
after sending the payment voucher to the checkout terminal,
receiving first payment result information sent by the payment server, wherein the first payment result information comprises first payment result first sub-information or first payment result second sub-information, the first payment result first sub-information indicates a payment success, and the first payment result second sub-information indicates a payment failure, and
sending transaction result prompt information corresponding to the first payment result information, wherein a display manner of the transaction result prompt information comprises at least one of a voice form or an indicator form.

4. The method according to any one of claims 1 to 3, wherein the near field communication terminal is connected to the checkout terminal through a universal serial bus.

5. A near field communication-based payment method performed by a user terminal, wherein the method comprises:
obtaining a payment page link from a near field communication terminal in a near field communication manner, wherein the near field communication terminal is communicatively connected to a checkout terminal in a wired manner, and is configured to provide a near field communication function to the checkout terminal; and
sending a payment authorization request to a payment server based on the payment page link, wherein the payment authorization request is used to authorize the payment server to send a payment voucher to the near field communication terminal, and the payment voucher is used to be sent by the near field communication terminal together with payment order information to the checkout terminal, to complete payment.

6. The method according to claim 5, wherein the sending a payment authorization request to a payment server based on the payment page link comprises:
waking up a payment application corresponding to the payment page link; and
sending the payment authorization request to the payment server corresponding to the payment application.

7. A near field communication-based payment method performed by a checkout terminal, wherein the checkout terminal is communicatively connected to a near field communication terminal in a wired manner, the near field communication terminal is configured to provide a near field communication function to the checkout terminal, and the method comprises:
obtaining a payment voucher from the near field communication terminal, wherein the payment voucher is generated by a payment server in response to a payment authorization request sent by a user terminal;
generating a payment request that carries the payment voucher and payment order information; and
sending the payment request to the payment server, wherein the payment request is used to request the payment server to perform an operation on a resource in an account corresponding to the payment voucher based on the payment order information, to complete payment.

8. The method according to claim 7, further comprising:
before the obtaining a payment voucher from the near field communication terminal,
sending collection indication information to the near field communication terminal, wherein the collection indication information is used to indicate the near field communication terminal to obtain a payment page link from the payment server, and the payment page link is used to trigger the user terminal to send the payment authorization request to the payment server; and/or
before the obtaining a payment voucher from the near field communication terminal,
obtaining first status information sent by the near field communication terminal, wherein the first status information is generated by the near field communication terminal when no user terminal is detected within predetermined duration after collection indication information sent by the checkout terminal is received,
generating first prompt information based on the first status information, wherein the first prompt information is used to prompt a user to interact with the near field communication terminal in a near field communication manner by using a user terminal, and
displaying the first prompt information; and/or
obtaining second status information sent by the near field communication terminal, wherein the second status information carries device information of a user terminal that establishes a near field communication connection to the near field communication terminal, and the device information comprises at least one of device hardware information or device operating system information,
generating second prompt information based on the second status information, wherein the second prompt information is used to prompt a user with a near field communication payment procedure corresponding to the device information, and
displaying the second prompt information.

9. The method according to any one of claims 7 or 8, wherein the near field communication terminal is connected to the checkout terminal through a universal serial bus.

10. A near field communication-based payment method performed by a payment server, wherein the method comprises:
obtaining a payment authorization request that is sent by a user terminal and that carries a terminal identifier of a near field communication terminal, wherein the near field communication terminal is communicatively connected to a checkout terminal in a wired manner, and is configured to provide a near field communication function to the checkout terminal;
generating a payment voucher in response to the payment authorization request;
sending the payment voucher to the near field communication terminal, so that the near field communication terminal sends the payment voucher to the checkout terminal;
receiving a payment request sent by the checkout terminal, wherein the payment request carries the payment voucher and payment order information; and
performing an operation on a resource in an account corresponding to the payment voucher based on the payment order information, to complete payment.

11. The method according to claim 10, further comprising:
before the obtaining a payment authorization request that is sent by a user terminal and that carries a terminal identifier of a near field communication terminal,
obtaining a payment page link acquisition request sent by the near field communication terminal,
generating a payment page link in response to the payment page link acquisition request, and
sending the payment page link to the near field communication terminal; and/or
after the performing an operation on a resource in an account corresponding to the payment voucher based on the payment order information,
sending first payment result information to the near field communication terminal, wherein the first payment result information comprises first payment result first sub-information or first payment result second sub-information, the first payment result first sub-information indicates a payment success, and the first payment result second sub-information indicates a payment failure, and the first payment result information is used to indicate the near field communication terminal to send transaction result prompt information corresponding to the first payment result information.

12. A near field communication terminal communicatively connected to a checkout terminal in a wired manner, and is configured to provide a near field communication function to the checkout terminal, wherein the near field communication terminal is configured to perform the method of any one of claims 1 to 4.

13. A user terminal configured to perform the method of any one of claims 5 or 6.

14. A checkout terminal configured to perform the method of any one of claims 7 to 9.

15. A payment server configured to perform the method of any one of claims 10 or 11.
